(19) Europäisches Patentamt
European Patent Office
Office européen des brevets

(11) **EP 4 370 980 B1**

(12) **EUROPEAN PATENT SPECIFICATION**

(45) Date of publication and mention
of the grant of the patent:
**11.02.2026   Bulletin 2026/07**

(21) Application number: **21769572.5**

(22) Date of filing: **18.08.2021**

(51) International Patent Classification (IPC):
**G05B 19/042** $^{(2006.01)}$    **G05B 13/04** $^{(2006.01)}$
**G05B 13/02** $^{(2006.01)}$

(52) Cooperative Patent Classification (CPC):
**G05B 19/0426; G05B 13/027; G05B 13/048**

(86) International application number:
**PCT/US2021/046463**

(87) International publication number:
**WO 2023/022712 (23.02.2023 Gazette 2023/08)**

(54) **EXPLICIT RULE-BASED CONTROL OF COMPLEX DYNAMICAL SYSTEMS**

EXPLIZITE REGELBASIERTE STEUERUNG KOMPLEXER DYNAMISCHER SYSTEME

CONTRÔLE À BASE DE RÈGLES EXPLICITES DE SYSTÈMES DYNAMIQUES COMPLEXES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.05.2024   Bulletin 2024/21**

(73) Proprietor: **Siemens Aktiengesellschaft
80333 München (DE)**

(72) Inventors:
• **HARTMANN, Dirk
85617 Aßling (DE)**
• **PANDEY, Amit
San Jose, California 95134 (US)**
• **GUMUSSOY, Suat
Princeton, New Jersey 08540 (US)**
• **MUENZ, Ulrich
Princeton, New Jersey 08540 (US)**

(74) Representative: **HKW Intellectual Property PartG
mbB
Theresienhöhe 12
80339 München (DE)**

(56) References cited:
**US-A1- 2004 249 483     US-A1- 2012 010 757
US-A1- 2015 234 779**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates generally to controllers for controlling complex dynamical systems, and in particular, to a technique for generating an explicit rule-based control for a dynamical system.

BACKGROUND

For the control of complex systems, such as electric grids, building systems, plants, automotive vehicles, factory robots, etc., complex controls are necessary. While it is possible to synthesize sophisticated controls for controlling such complex systems, such as model predictive control (MPC), their implementation is often limited by hardware restrictions.

With an MPC controller, depending on the input variables, a future behavior of a system to be controlled is simulated in order to determine an output signal (control action) that optimizes the behavior of the system, often with defined constraints. MPC yields optimal solutions in a mathematical sense. However, such a control requires solving a mathematical program online to compute the control action. Linear MPC controllers are state of the art in industry. Considering highly non-linear problems with many constraints or even discrete variables / decisions, the realization of MPC can be quite challenging. MPCs require high computational efforts and mathematical challenges are associated with corresponding non-linear optimization technologies, e.g., non-guarantee of convergence.

Further prior art can be found in US 2015/234779 A1 and US 2012/010757 A1. US 2015/234779 A1 relates generally to solving a convex quadratic program (QP) for a convex set with linear equalities, and more particularly to solving the convex QP by an Alternating Direction Method of Multipliers (ADMM). US 2012/010757 A1 relates to energy management systems capable of optimizing the operational features of a plant, such as the costs/profits associated with the production, use and/or sale of a desirable product such as energy within a plant/community in which complex optimization decisions are present.

A known approach to address the above-described challenge involves explicit model predictive control (explicit MPC). By solving the optimization problem off-line for a given range of operating conditions of interest and exploiting multiparametric programming techniques, explicit MPC computes the optimal control action off-line as an "explicit" function of the state and reference vectors, so that on-line operations reduce to a simple function evaluation. However, the 'size' of these explicit functions increases rapidly with the number of system states and constraints, so that they may become intractable to compute for large, complex systems.

Alternatively, or additionally, a data-driven machine learning model can be trained on the basis of simulations, which then supplements or replaces the online MPC computation. However, a control characteristic conveyed by a trained machine learning model, such as a neural network, is usually hardly analytically comprehensible or interpretable for a user, such as a technician, or an agency tasked to certify the controller, among others. Furthermore, for a neural network to accurately mimic a MPC solution, a large number of hidden nodes may be required, which can require greater computational resources.

SUMMARY

Briefly, aspects of the present disclosure provide a technique for generating an explicit rule-based control for a dynamical system that addresses at least some of the above-described technical problems.

A first aspect of the disclosure provides a method for configuring a controller of a dynamical system. The method comprises reading a plurality of state signals, each state signal specifying a state of the dynamical system and being mapped to a multi-dimensional state space. The method further comprises using a first control algorithm to determine, for each state signal, a control signal that is assigned to that state signal. Each state signal and the assigned control signal represents a respective control point in a control data manifold pertaining to the dynamical system. The method further comprises detecting patches on the control data manifold by identifying control points on the control data manifold that belong to a common local approximation function. The method further comprises training a classifier to classify control points into different patches from among the detected patches. The method further comprises training a respective regression model for each detected patch for approximating a relationship between the state signals and the control signals in that patch. The trained classifier and regression models are used to create an explicit rule-based control algorithm, which is configured to convert a measured state signal obtained from the dynamical system into a control action by identifying an active patch as a function of the measured state signal and evaluating the respective regression model for the identified active patch.

A second aspect of the disclosure provides a method not part of the invention for controlling a dynamical system. The method comprises creating an explicit rule-based control algorithm according to a method described above. The method further comprises using the explicit rule-based control algorithm to control the dynamical system by: receiving a measured state signal from the dynamical system, identifying an active patch as a function of the measured state signal, and executing a control action as a function of the measured state signal by evaluating the respective regression model for the identified active patch.

Other aspects of the present disclosure implement features of the above-described methods in controllers and computer program products.

Additional technical features and benefits may be realized through the techniques of the present disclosure. Embodiments and aspects of the disclosure are described in detail herein and are considered a part of the claimed subject matter. For a better understanding, refer to the detailed description and to the drawings.

BRIEF DESCRIPTION OF THE DRAWINGS

The foregoing and other aspects of the present disclosure are best understood from the following detailed description when read in connection with the accompanying drawings. To easily identify the discussion of any element or act, the most significant digit or digits in a reference number refer to the figure number in which the element or act is first introduced.

FIG. 1 is a schematic diagram illustrating an example embodiment of a platform for creating an explicit rule-based control algorithm which may be used by a controller for controlling a dynamical system.

FIG. 2 illustrates a representative visualization of a control data manifold produced by model predictive control of a second order linear system with a constrained input.

FIG. 3 illustrates a visualization of approximated hyperplanes on the control data manifold shown in FIG. 2.

FIG. 4 illustrates a controller for controlling a dynamical system using an explicit rule-based control algorithm created in accordance with disclosed embodiments.

FIG. 5 illustrates an example embodiment of a method for determining a control action by the explicit rule-based control algorithm based on a measured state signal using support vector machines.

FIG. 6A, 6B and 6C depict operating parameters in connection with an illustrative use case of utilizing the disclosed embodiments for providing an optimal economic dispatch of electricity from a grid.

FIG. 7 depicts a control signal generated by a model predictive control algorithm for the illustrative use case, with a prediction horizon m=2.

FIG. 8 depicts a visualization of a control data manifold with approximated hyperplanes for the illustrated use case.

DETAILED DESCRIPTION

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

It is recognized that many modern control algorithms may be synthesized to work well in simulation environments but are challenging to implement on controllers for online control of a complex dynamical system, due to restrictions and limitations in controller hardware. The disclosed methodology may be used to extract rules from advanced control algorithms which can be implemented in existing controllers, such as programmable logic controllers (PLC) or another type of computing device. Furthermore, the resulting control algorithm is transparent and readily interpretable due to its explicit character, allowing personnel, such as a technician or an official authority, to better understand relationships between controller inputs and outputs.

As mentioned above, in case of traditional explicit MPC, the 'size' of the explicit functions increases rapidly with the number of system states and constraints, so that they may become intractable to compute for large, complex systems.

Furthermore, often it may not be feasible to reduce the input state space into lower dimensions. The disclosed methodology provides a solution that can be scalable to high dimensional system states by implementing a technique for identifying patches (such as hyperplanes) in the control data manifold and grouping the control data points according to the patches. Control rules are then extracted by training a regression model for each patch, to create an explicit rule-based control algorithm. When deployed on a controller hardware for online control, the explicit rule-based control algorithm may use a simple indicator function to identify an active patch as a function of a measured input state signal and evaluate a corresponding regressor to determine a control action.

The disclosed methodology may thus provide an efficient mechanism by which hardware controllers can apply control rules and determine control actions for high-dimensional system states, without the stringent computational requirements of MPC, neural networks, or other advanced control algorithms. Through indicator functions that encapsulate patches in control data manifolds and regression models, the technology described herein may provide a computationally elegant methodology to evaluate control actions for complex system states, all the while maintaining requisite accuracy and effectiveness of generated control actions.

The disclosed methodology does not depend on the type of control algorithm for which rules are to be extracted or the type of controller hardware where the resulting explicit rule-based control algorithm is to be executed. The embodiments described herein suitably address the problem of generating explicit control rules based on model predictive control (MPC), which contains sophisticated optimization problems that can place a substantial computational burden particularly on old or under-powered field controllers. It will however be appreciated that the underlying technique is not limited to MPC or any particular type of control algorithm.

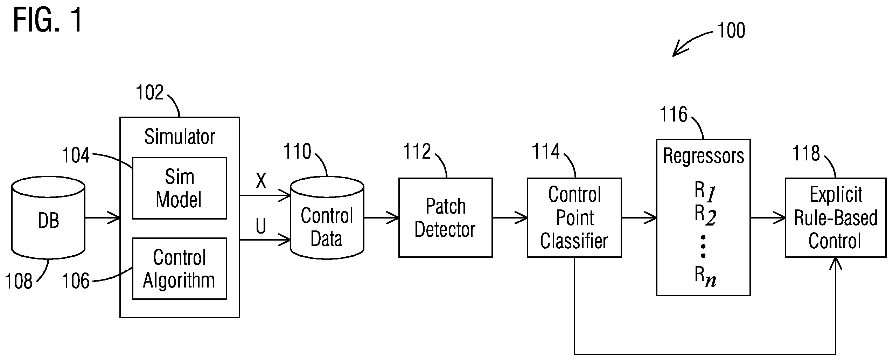

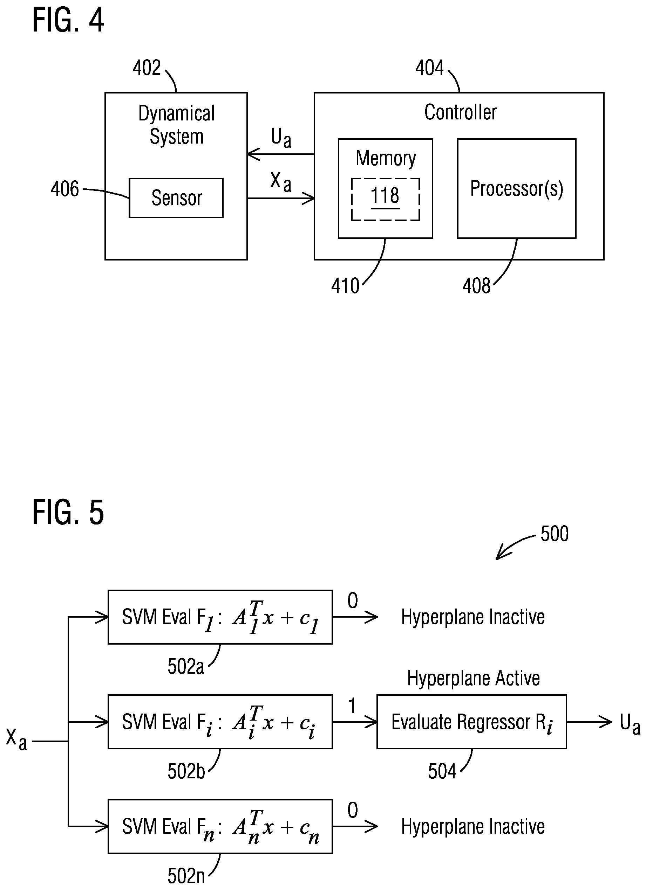

Referring now to the drawings, FIG. 1 illustrates a control rule generation platform 100 according to an example embodiment of the disclosure. The platform 100 comprises computational modules that can be executed in an off-line phase to create an explicit rule-based control algorithm 118. The resulting explicit rule-based control algorithm 118 can be used for online control of a dynamical system (see FIG. 4) in a manner that may mimic an advanced control algorithm 106, such as a MPC algorithm, without having to online solve a computationally demanding optimization problem. To that end, the platform 100 may be implemented in a remote computing environment with respect to the controller of the dynamical system where it is subsequently deployed. In one embodiment, the platform 100 may be implemented in a cloud computing environment, which may allow using almost unlimited computational resources in the off-line phase. The dynamical system to be controlled may comprise, for example, an electric grid, a building system, a production or process plant, an automotive vehicle, a factory robot, or any other physical system where a system state varies with time as a function of a control action produced by a controller.

The platform 100 includes a simulator 102 to simulate the dynamical system or one or more of its components. The simulator 102 serves the purpose of simulatively generating a large number of state signals X and a control signal U for each state signal X using a simulation model 104 of the dynamical system that interacts with the control algorithm 106. Each state signal X may specify a discrete state of the dynamical system. In the shown embodiment, the state signals are read from the simulation model 104. For each state signal X, a control signal U is generated by the control algorithm 106 and assigned to the respective state signal X. The control signal U may be determined as a function of the state signal X such that, when applied, it optimizes behavior of the dynamical system, as simulated by the simulation model 104. In some embodiments, the simulation model 104 may comprise a high-fidelity physics-based model, which may be part of a digital twin of the dynamical system.

The state signals X may include, for instance, physical, chemical, design-related operating parameters, property data, performance data, environmental data, monitoring data, forecast data, analysis data and / or other data arising in the operation of the dynamical system and / or describing an operating state of the dynamical system. For example, if the dynamical system comprises a vehicle, the state signals X may include positioning data, speed, temperature, pressure, rotational speed, emissions, vibrations, fuel consumption, etc. The control signal U may be determined on the basis of solving an optimization problem by the control algorithm 106, to optimize the behavior of the dynamical system. The optimization problem may include minimizing a cost function, for example, associated with energy/power consumption, wear, distance, time, price, etc.

The state signals X can be represented as numerical data vectors mapped to a multi-dimensional state space. The control signals U may also be represented as numerical data vectors mapped to a multi-dimensional control action space, or may be represented as scalar values (onedimensional control action space). In one embodiment, the state signals X and the control signals U represent time series data, where, for each time step, a respective control signal U is generated by the control algorithm 106 based on an updated state signal X for that time step. The state signal X is then updated for the next time step as induced by the action resulting from the control signal U. The time series data pertaining to state signals X and the control signals U are preferably generated for a variety of initial states and operating scenarios of the dynamical system. The initial states and operating scenarios may be obtained from a database 108.

For this purpose, the simulation model 104 may simulate a behavior of the dynamical system for a variety of operating scenarios. The latter may include a variety of operating conditions and/or operating states that may occur during the operation of the dynamical system. Such operating scenarios may be extracted from operating data of the dynamical system and / or from the database 108. In one embodiment, a variety of operating scenarios and initial states of the dynamical system may be generated by a scenario generator of the simulator 102 (not shown). The scenario generator may generate, in the operation of the dynamical system, possibly occurring state signals, trajectories, time series, external influences, operating events and / or constraints to be satisfied. To vary the generated operating scenarios, the scenario generation can also be random. The generation of the operating scenarios may be based on basic data or model data for the dynamical system, which may be stored in the database 108 and fed into the scenario generator for the purpose of generation of operating scenarios.

In the described embodiment, the control algorithm 106 is an MPC algorithm. The MPC algorithm 106 typically generates, for each state signal X, a plurality of variants of a control signal. The behavior of the dynamical system is simulated for each of the variants of the control signal over a defined number of time steps, referred to as prediction horizon. Based on the simulated behavior, one of the variants can be selected and assigned as the control signal U for the given state signal X that leads to an optimized behavior of the dynamical system, possibly with specified constraint(s). For example, the variant providing an optimized behavior of the dynamical system may be determined as one that results in the lowest value of a cost function subject to the constraint(s), from among the plurality of variants. The assigned control signal U is applied for a single time step, after which the above-described optimization is solved again over a receding prediction horizon, with an updated state signal X which is induced by the assigned control signal U determined at the previous time step.

As an alternate example, the control algorithm 106 may comprise a neural network based policy. The policy may be trained to map state signals to assigned control signals, for example, based on reinforcement learning (RL) or any other method.

In various embodiments, as an alternative to the simulative signal generation illustrated in FIG. 1, the state signals X and the control signals U may be obtained (e.g., by actual measurement) by performing a large number of experiments involving a real-world interaction between an on-field controller executing the control algorithm and the dynamical system. This approach may be useful in a scenario involving an existing controller for which there is no access to the underlying controller code (e.g., controller code containing neural network based policies). The disclosed methodology can be used in this case to extract rules from the underlying controller code / control algorithm to make it more interpretable to concerned personnel. The extracted rules may also allow for the controller to be generalized and easily ported from one dynamical system to another (similar) dynamical system. In still other embodiments, simulative signal generation and real-word signal measurements may be combined or augmented with each other.

The state signals X and the assigned control signals U are read into a storage medium containing control data 110. The control data 110 comprises a large number of control points (X, U), each defined by a state signal X and a control signal U assigned to that state signal. The control points are represented in a control data space having a high dimensionality, depending on the dimensionality of the state space (input space) and the control action space (output space). In practice, the control points lie on a lower-dimension manifold embedded in a higher-dimensional control data space. Such a manifold is referred to here as control data manifold. For a scalar output, the control data manifold may have the dimensionality of the input space.

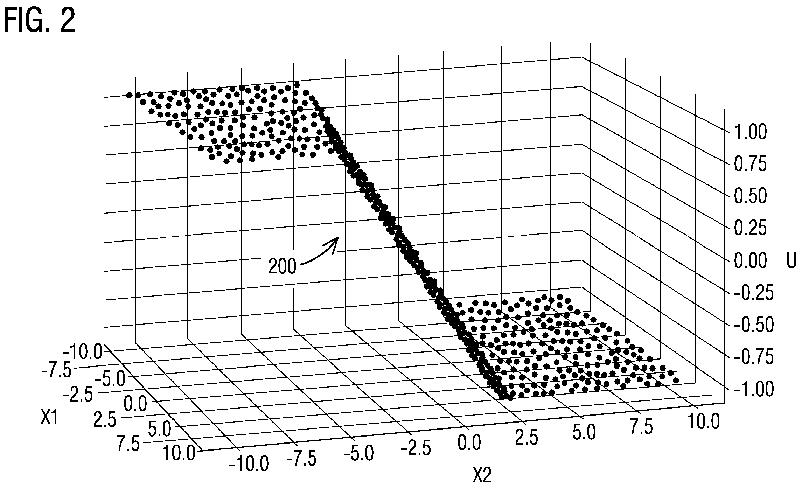

For the purpose of a simple visual illustration, FIG. 2 shows a representative control data manifold 200 produced by MPC of a second order linear system with a constrained input. As shown, the input space is mapped to two dimensions, represented by state parameters $X1$ and $X2$, while the output space is mapped to one dimension, represented by a single control parameter U. The control points lie on a two-dimensional control data manifold 200 embedded in a three-dimensional control data space.

Referring again to FIG. 1, the platform 100 includes a computational module 112, referred to as patch detector, for detecting patches on the control data manifold. The term "patch" as defined herein, refers to an atomic element defined by a local approximation function that best fits a region of the control data manifold. A patch thus has the same dimensionality as the control data manifold. A local approximation function may include, for example, a linear, quadratic or higher polynomial function. A patch defined by a linear local approximation function is referred to as a hyperplane.

In the patch detector 112, patches are detected in an unsupervised manner by identifying control points on the control data manifold that belong to a common local approximation function. According to an exemplary algorithm, the patch detector 112 samples control points Q in the control data manifold and determines a set Z of k nearest control points in the neighborhood of each sampled control point Q. Next, the patch detector 112 determines an equation E of a local approximation function describing a region (patch) in the control data manifold comprising the control point Q and the set Z of k neighborhood control points (i.e., an equation fitting Q+Z). If the equation E is the same as or similar to an equation of a stored local approximation function of another patch, then the local approximation function associated with Q+Z is assigned an existing patch label; if not, then the local approximation function associated with Q+Z is assigned a new patch label. In an example embodiment, "similarity" of the equation E with any of the stored local approximation function may be determined, by comparing a fitting error of equation E to a fitting error of the respective stored local approximation function. If there exists a stored local approximation function for which the fitting error is close to the fitting error of the equation E (e.g., within a defined threshold), then the patch label of that stored local approximation function as assigned to the equation E; else a new patch label is created. After sampling the control points in the control data manifold, a set of $n$ patch labels are detected, and each patch may be represented by a unique local approximation function.

In the case of a linear system, such as that in the example shown in FIG. 2, the patches detected on the control data manifold comprise hyperplanes. In this case, the equations E used in the above-described patch detector algorithm comprise linear equations, whose coefficients can be determined to fit a hyperplane on a neighborhood of control points associated with each sampled control point.

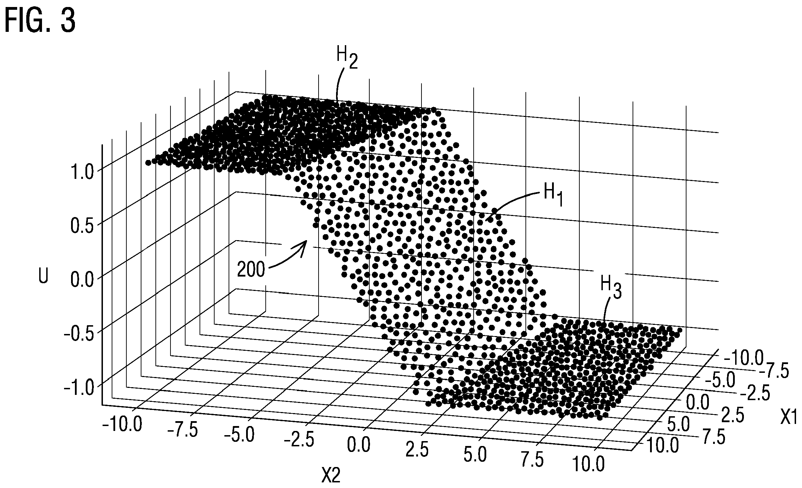

FIG. 3 illustrates a visualization of hyperplanes approximated on the control data manifold 200 shown in FIG. 2. In this case, the patch detector algorithm has detected, in an unsupervised process, hyperplanes $H_1$, $H_2$, and $H_3$, by grouping control points that belong to a common local approximation function, for example, as explained above. The hyperplane $H_1$ is indicative of a linear constrained control, while the hyperplanes $H_2$, and $H_3$ are indicative of saturation effects of the control algorithm 106.

In the shown visualization, since the control data manifold 200 is two-dimensional, the linear patches $H_1$, $H_2$, and $H_3$ also belong to respective two-dimensional planes. To generalize, for any higher order linear system, the control data manifold is of P dimensions (where $P \geq 2$) and may be formed by a plurality of P-dimensional hyperplanes embedded in a higher-dimensional (>P) control data space. The example shown in FIGS. 2 and 3 can thus be said to have two-dimensional hyperplanes embedded in a three-dimensional control data space.

The patch detector algorithm is thereby able identify regions on the control surface without prior knowledge of the controller behavior. Thus, in addition to approximating the control rules, the above-described patch detector algorithm can be extended to identify different functional elements comprising the controller - such as saturation elements, LQR controller surfaces, PID controller surfaces - without any prior knowledge of the controller.

For some controllers, the control points may define one or more regions containing sharp edges, which may potentially lead to an error of mis-identifying control points along these edges into an appropriate hyperplane. In this case, it is still reasonable to assume that the regions containing sharp edges are smaller in measure than the patches / hyperplanes. A first solution to the above technical problem involves first classifying the control points into hyperplanes (using a control point classifier 114 as described below) and subsequently mapping mis-identified sharp edges into one of the hyperplanes. A second possible solution may involve identifying abrupt changes in local fitting and refining neighborhood points. Sharp edges in control data are particularly typical in case of reinforcement learning (RL) - based controllers. For such controllers, the RL training may be modified to include smaller steps or to move away from sharp edges.

In some linear controls, the hyperplanes may be distinguished by a different set of constraints being active. In such examples, if there is an a-priori knowledge about constraints, the hyperplanes may be assigned classification labels by evaluating a constraint function. However, the disclosed methodology does not necessarily rely on a-priori knowledge of constraints.

For complex non-linear systems, the control data manifold may comprise one or more non-linear regions. In such a case, the patch detector 112 may be configured according to one of the belowmentioned approaches. In a first approach, the patch detector 112 may fit a plurality of hyperplanes to approximate a non-linear region on the manifold. In one embodiment, the patch detector 112 may work with a specified maximum number of hyperplanes that the control rules are be approximated with. In a second approach, the patch detector 112 may fit a non-linear region with a single non-linear patch or multiple non-linear patches, each defined by a quadratic or a higher order polynomial local approximation function. Such a technique could be employed to reduce or optimize the number of patches used to approximate the non-linear region of the control data manifold and/or to reduce an error between the control points on the manifold and the local approximating functions. The patch detector 112 need not rely on a-priori knowledge about linearity of the controller and may appropriately determine a local approximation function based on determining a rate of change of each hyperplane and correlating the rate of change within a region to fit either a linear or a polynomial local approximation function.

Still referring to FIG. 1, the platform 100 includes a computational module 114 for training a control point classifier for classifying control points into different patches from among the detected patches. The control point classifier can be trained in a supervised process using patch labels created by the patch detector 112. In one embodiment, the control point classifier may comprise support vector machines (SVMs) to classify the control points into different patches. SVMs are particularly suitable in the present application as being simple and easy to understand and interpret. Another suitable embodiment of a classifier providing easy interpretability may include decision trees. In various embodiments, other mathematical and/or machine learned models may be used to for classifying the control points into patches.

For multiclass classification using SVM, a binary classification principle can be utilized after breaking down the multiclassification problem into multiple binary classification problems. In the disclosed embodiment, a number of SVMs are trained that equals the number ($n$) of patches detected in the control data manifold. Here, each SVM is trained to perform a binary classification between a given patch and the other patches (one-versus-all). After training, each patch is assigned an SVM indicator function, which may be evaluated to determine whether a control point belongs to that patch or not. For a hyperplane classification problem, the SVM indicator functions assume the form of linear equations (see FIG. 5). A total of $n$ SVM indicator functions $F_1$, $F_2$, ... $F_n$ are thus generated. The SVM indicator functions can be evaluated to classify a measured state signal into an active patch during online operation.

Continuing with reference to FIG. 1, the platform 100 includes a computational module 116 for training a respective regression model (regressor) for each detected patch for approximating a relationship between the state signals and the control signals in that patch. A total of $n$ regressors $R_1$, $R_2$...$R_n$ are trained, each regressor corresponding to a respective patch. In embodiments, depending on the patch, the associated regressor may comprise a linear regression model or a polynomial regression model. In the example illustrated herein (see FIG. 3), each hyperplane $H_1$, $H_2$, $H_3$ may be associated with a respective trained linear regression model $R_1$, $R_2$, $R_3$. Each regression model in this example specifies an explicit linear relationship between the input variables (state parameters X1, X2) and the output variable (control parameter U) for the respective hyperplane, that may be easily solved online and readily interpreted. In some embodiments, one or more of the regressors may be trained by assembling discrete rule elements (e.g., mathematical operators such as '+', '*', EXP, ...) and performing symbolic regression to determine an expression that best fits the patch.

The trained control point classifier (in this case, defined by SVM indicator functions $F_1$, $F_2$, ... $F_n$) and the regression models $R_1$, $R_2$...$R_n$ are used to create the explicit rule-based control algorithm 118. The explicit rule-based control algorithm 118 may be embodied in a computer program, which can be be transferred to a memory of a controller for controlling the dynamical system. In embodiments, the transfer may take place electronically, from a remote location, such as via the Internet, or by way of a physical memory, such as a flash drive. Alternately, the set up of the explicit rule-based control algorithm 118 can be implemented directly on the hardware of the controller for controlling the dynamical system.

FIG. 4 illustrates a controller 404 for controlling a dynamical system 402 by executing an explicit rule-based control algorithm 118 created according to one of the disclosed embodiments. The controller 404 may comprise a PLC, an industrial PC, an edge device or other computing device including one or more processors 408 and a memory 410 storing a computer program incorporating the explicit rule-based control algorithm 118. The controller 404 may be implemented as part of the dynamical system 402 (such as a controller embedded in a vehicle or robot) or may be implemented in part or wholly external to the dynamical system 402. In the drawing, the controller 404 is shown external to the dynamical system 402 for reasons of clarity.

The dynamical system 402 includes at least one sensor 406, which continuously measures one or more operating states of the dynamical system 402 and outputs them in the form of a measured state signal $X_a$. The measured state signals $X_a$ can each be represented as a numerical data vector mapped to a multi-dimensional state space. In embodiments, the measured state signals $X_a$ are coded over time, representing time series data. The measured state signals $X_a$ are transmitted to the controller 404. Based on the measured state signal $X_a$ at each time step, the controller 404 determines a control action $U_a$ to optimize a behavior of the dynamical system 402 by executing the explicit rule-based control algorithm 118. The control action $U_a$ is determined by identifying an active patch as a function of the measured state signal $X_a$ and evaluating the respective regression model for the identified active patch.

Continuing with the described embodiment of a linear system, FIG. 5 illustrates an exemplary method 500 for determining a control action $U_a$ by the explicit rule-based control algorithm 118 based on a measured state signal $X_a$. As stated above, in the described embodiment, $n$ SVMs are generated that are each associated with a respective hyperplane, for which the respective SVM indicator functions $F_1$, $F_2$, ... $F_n$ are codified in the explicit rule-based control algorithm 118.

Referring to FIG. 5, at each time step, the method 500 involves evaluating SVM indicator functions $F_1$, $F_2$, ... $F_n$ for individual hyperplanes using the measured state signal $X_a$ as displayed in blocks 502a, 502b..502n. An active hyperplane is detected when a respective SVM indicator function $F_i$ yields a value 1. All other SVM indicator functions that yield a value 0 indicate inactive hyperplanes. Having determined the active hyperplane, next, at block 504, the respective regressor $R_i$ for the active hyperplane is evaluated using the same measured state signal $X_a$, to yield the control action $U_a$.

The described approach of evaluating SVM indicator functions to identify an active patch and evaluating a regressor associated with the active patch to determine a control action may be likewise implemented for non-linear systems by fitting non-linear regions by multiple hyperplanes or using polynomial local approximation functions and regressors as described above.

Referring again to FIG. 4, using the explicit rule-based control algorithm 118, the controller 404 converts the state signal $X_a$ into a control action $U_a$ in a manner that mimics the control algorithm 106 described in FIG. 1. The control action $U_a$ induces a change in system state of the dynamical system 402, which is reflected in the measured state signal $X_a$ transmitted to the controller 404 in the next time step, for which a subsequent control action $U_a$ may be determined as described above. A temporal control of the dynamical system 402 by the controller 404 is thereby established to optimize, at each time step, a future behavior of the dynamical system 402. Since the algorithm 118 is simple and explicitly rule-based (using a combination of indicator functions and regressors), it is not computationally intensive, and the controller 404 can evaluate control actions based on high-dimensional system states without having to solve complex optimization problems on the fly.

An illustrative use case is now described where the disclosed embodiments may be utilized for providing an optimal economic dispatch of electricity from a grid. Although the illustrative use case is simple, the underlying principle can be applied to complex systems with high-dimensional system states and a large number of constraints.

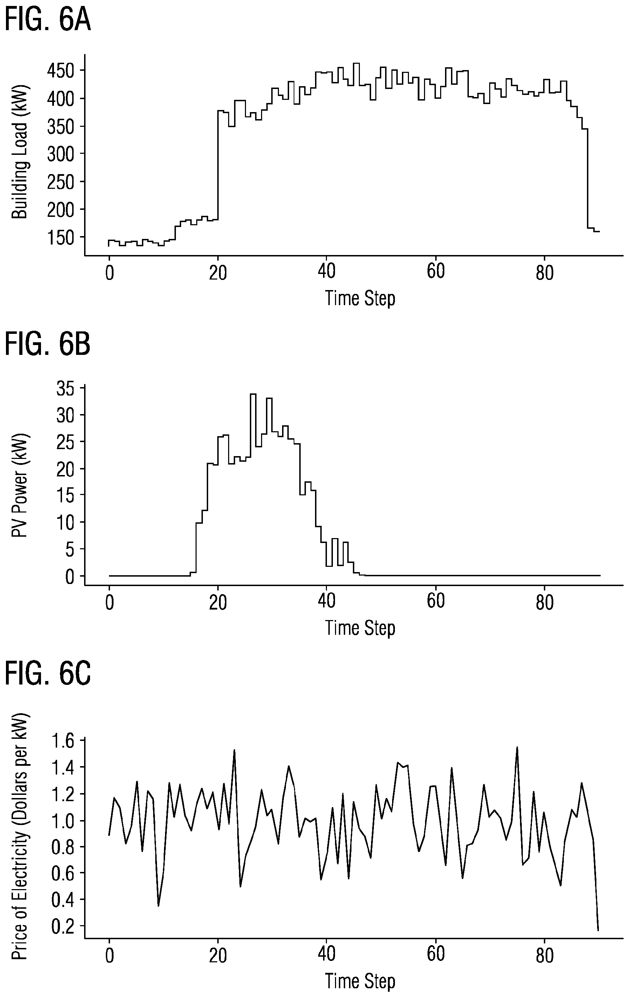

The dynamical system in the described use case includes a battery that is chargeable by a photovoltaic (PV) panel and dischargeable to provide power to a building, which also receives power from the grid. A controller is tasked with controlling the charging or discharging of the battery to minimize the price of transacting power from the grid. The temporally varying operational states of the dynamical system comprise: (i) building power consumption or load $L_i$, which is depicted in FIG. 6A (based on defined usage patterns), (ii) power produced by the PV panel $S_i$, which is depicted in FIG. 6B (typically matching daylight energy), and (iii) price of electricity $p_i$ (per unit of power), which is depicted in FIG. 6C.

The optimization problem in this use case may be formulated as minimization of a linear cost function given by:

$$\text{minimize } \sum_{i=1}^{m} p_i(-S_i + L_i + B_i) \qquad \text{(eq. 1)}$$

subject to the constraints: $0 \leq B_i \leq 100$; $|\Delta B_i| \leq d$;

where m is the prediction horizon of the controller, $B_i$ is the state of charge of the battery, and d is the maximum amount of charging or discharging allowed in a single time step.

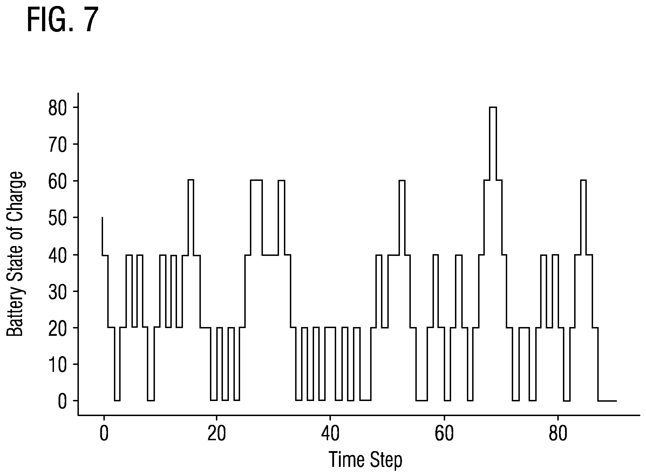

An MPC algorithm can be used to solve the above optimization (eq. 1) at every time step and apply the first control step before re-solving with a receding horizon. The control action generated by the MPC for $m=2$ is represented in FIG. 7, where, at each time step, the MPC algorithm determines an action which may be either of (i): charging the battery (i.e., building uses power from the grid); or (ii) discharging the battery (i.e., building uses own resources without power from the grid); or (iii) not changing the state of charge (i.e., building uses power from the grid); with the objective of minimizing the price of electricity transacted from the grid.

For a prediction horizon $m=2$ it is recognized that the control action U at each time step may be solely determined based on the following state parameters: X1 - change in electricity price at that time step; and X2 - battery state of charge. With this, the present use case reduces to an MPC problem for a second order linear system with constrained input, similar to the representative example shown in FIGS. 2 and 3.

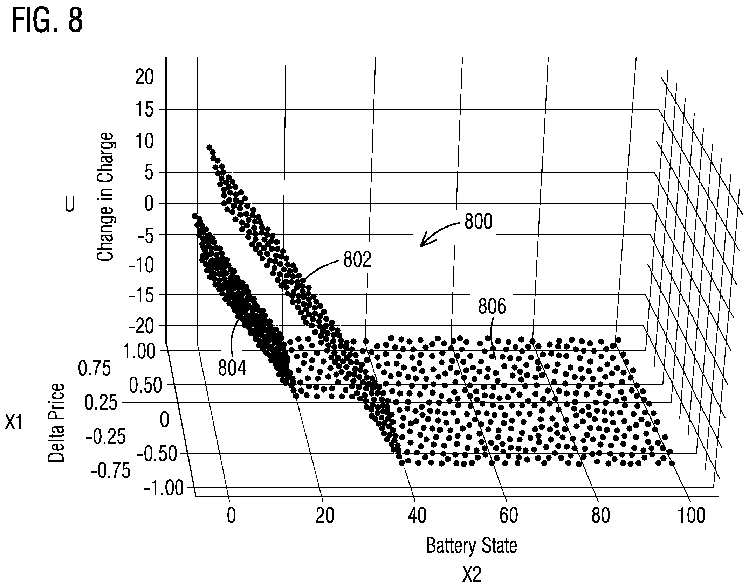

FIG. 8 shows a control data manifold 800 formed by sampling a large number of state signals and control signals for the present use case, for example, by simulatively generating these signals (as described in FIG. 1) and/or by performing on-field experiments. From the control data manifold, the above-described methodology may be used to detect hyperplanes 802, 804, 806, classify control points to hyperplanes and train linear regression models for each detected hyperplane, to create an explicit rule-based algorithm which may be deployed in the controller in the present use-case to mimic the MPC solution.

The above-described use case is merely illustrative, and several other applications of the disclosed methodology exist. As non-limiting examples, the disclosed methodology may be used in a building controller (e.g., to adapt room heating/cooling to weather and use), in an automotive controller (e.g., to provide energy optimal predictive power control for given speed corridor), in a process controller (e.g., to control highly dynamic reactions), in a factory robot controller (e.g., to provide energy and wear optimized robot paths), among other applications.

The embodiments of the present disclosure may be implemented with any combination of hardware and software. In addition, the embodiments of the present disclosure may be included in an article of manufacture (e.g., one or more computer program products) having, for example, a non-transitory computer-readable storage medium. The computer readable storage medium has embodied therein, for instance, computer readable program instructions for providing and facilitating the mechanisms of the embodiments of the present disclosure. The article of manufacture can be included as part of a computer system or sold separately.

The computer readable storage medium can include a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. Computer readable program instructions described herein can be downloaded to respective computing/processing devices from a computer readable storage medium or to an external computer or external storage device via a network, for example, the Internet, a local area network, a wide area network and/or a wireless network.

The system and processes of the figures are not exclusive. Other systems, processes and menus may be derived in accordance with the principles of the disclosure to accomplish the same objectives. Although this disclosure has been described with reference to particular embodiments, it is to be understood that the embodiments and variations shown and described herein are for illustration purposes only.

**Claims**

1. A method for configuring a controller (404) of a dynamical system (402), comprising:

reading a plurality of state signals (X), each state signal (X) specifying a state of the dynamical system (402) and being mapped to a multi-dimensional state space,

using a first control algorithm (106) to determine, for each state signal (X), a control signal (U) that is assigned to that state signal (X), wherein each state signal (X) and the assigned control signal (U) represents a respective control point (Q) in a control data manifold (200) pertaining to the dynamical system (402),

detecting patches on the control data manifold (200) by identifying control points (Q) on the control data manifold (200) that belong to a common local approximation function,

training a classifier (114) to classify control points (Q) into different patches from among the detected patches,

training a respective regression model ($R_1$-$R_n$.) for each detected patch for approximating a relationship between the state signals (X) and the control signals (U) in that patch, and

using the trained classifier (114) and regression models ($R_1$-$R_n$.) to create an explicit rule-based control algorithm (118), which is configured to convert a measured state signal (X) obtained from the dynamical system (402) into a control action by identifying an active patch as a function of the measured state signal (X) and evaluating the respective regression model ($R_1$-$R_n$.) for the identified active patch.

2. The method according to claim 1, wherein the state signals (X) and the control signals (U) represent time series data, wherein for each time step, a respective control signal (U) is generated by the first control algorithm (106) based on an updated state signal (X) for that time step, and wherein time series data pertaining to state signals (X) and the control signals (U) are generated for a variety of initial states and scenario parameters of the dynamical system (402).

3. The method according to any of claims 1 and 2, comprising simulatively generating state signals and the control signals (U) based on an interaction of the first control algorithm (106) with a simulation model (104) of the dynamical system (402)

4. The method according to claim 3, wherein the first control algorithm (106) comprises a model predictive control, MPC, algorithm, wherein the method comprises:

reading state signals (X) from the simulation model (104),

using the MPC algorithm to determine, for each state signal (X), a plurality of variants of a control signal (U),

using the simulation model (104) to simulate a behavior of the dynamical system (402) for each of the variants of the control signal (U) over a defined prediction horizon, and

assigning one of the variants of the control signal (U) to the respective state signal (X) that results in an optimized behavior of the dynamical system (402).

5. The method according to any of claims 1 to 3, wherein the first control algorithm (106) comprises a neural network-based policy trained to map state signals (X) to assigned control signals (U).

6. The method according to any of claims 1 to 5, comprising generating state signals (X) and the control signals (U) by performing a plurality of experiments involving interaction of an on-field controller (404) executing the first control algorithm (106) with the dynamical system (402).

7. The method according to any of claims 1 to 6, wherein detecting patches on the control data manifold (200) comprises an unsupervised process of:

sampling control points (Q) in the control data manifold (200),

for each sampled control point (Q), determining a local approximation function describing a patch formed by a neighborhood of control points (Q) associated with that sampled control point (Q), and

labeling the determined local approximation function with an existing patch label or a new patch label based on a similarity with stored local approximation functions representative of other patches.

8. The method according to any of claims 1 to 7, wherein each patch comprises a hyperplane in a space where the control data manifold (200) is embedded.

9. The method according to claim 8, wherein the respective regression models ($R_1$-$R_n$.) each comprises a linear regression model.

10. The method according to any of claims 8 and 9, wherein the control data manifold (200) comprises a non-linear region, wherein detecting patches on the control data manifold (200) comprises fitting a plurality of hyperplanes on the non-linear region.

**11.** The method according to any of claims 1 to 7, wherein the control data manifold (200) comprises a non-linear region, wherein detecting patches on the control data manifold (200) comprises fitting the non-linear region with one or more patches defined by polynomial local approximation functions.

**12.** The method according to claim 11, wherein the regression models ($R_1$-$R_n$.) trained for the one or more patches comprise respective polynomial regression models.

**13.** The method according to any of claims 1 to 12, comprising training a corresponding support vector machine, SVM, for each patch to classify control points (Q) into different patches, wherein the active patch is identifiable by using the measured state signal (X) to evaluate an SVM indicator function associated with individual patches.

**14.** A non-transitory computer-readable storage medium including instructions that, when processed by a computing device, configure the computing device to perform the method according to any of claims 1 to 13.

**15.** A controller (404) for a dynamical system (402), comprising:

a processor (408); and
a memory (410) storing a computer program incorporating an explicit rule-based control algorithm (118), which, when executed by the processor (408), configures the controller (404) to:

receive a measured state signal (X) from the dynamical system (402),
identify, as a function of the measured state signal (X), an active patch out of multiple patches on a control data manifold (200) pertaining to the dynamical system (402), using a trained control point classifier (114), the control data manifold (200) being formed by a plurality of stored control points (Q), each control point (Q) representative of a state signal (X) specifying a state of the dynamical system (402) and a control signal (U) assigned to that state signal (X), each state signal (X) being mapped to a multi-dimensional state space, each patch being defined by control points (Q) on the control data manifold (200) that belong to a common local approximation function, and
execute a control action as a function of the measured state signal (X) by evaluating a trained regression model ($R_1$-$R_n$.) associated with the identified patch, the regression model ($R_1$-$R_n$.) being trained to approximate a relationship between the state signals (X) and the control signals (U) in the identified patch.

**Patentansprüche**

**1.** Verfahren zum Konfigurieren einer Steuerung (404) eines dynamischen Systems (402), umfassend:

Lesen einer Mehrzahl von Zustandssignalen (X), wobei jedes Zustandssignal (X) einen Zustand des dynamischen Systems (402) spezifiziert und auf einen mehrdimensionalen Zustandsraum abgebildet wird,
Verwenden eines ersten Steueralgorithmus (106), um für jedes Zustandssignal (X) ein Steuersignal (U) zu bestimmen, das diesem Zustandssignal (X) zugewiesen ist, wobei jedes Zustandssignal (X) und das zugewiesene Steuersignal (U) einen jeweiligen Steuerpunkt (Q) in einem Steuerdatenverteiler (200) in Bezug auf das dynamische System (402) darstellen,
Erkennen von Patches auf dem Steuerdatenverteiler (200) durch Identifizieren von Steuerpunkten (Q) auf dem Steuerdatenverteiler (200), die zu einer gemeinsamen lokalen Näherungsfunktion gehören,
Trainieren eines Klassifikators (114), um Steuerpunkte (Q) aus den erkannten Patches in verschiedene Patches zu klassifizieren,
Trainieren eines entsprechenden Regressionsmodells ($R_1$-$R_n$.) für jedes erkannte Patch zum Annähern einer Beziehung zwischen den Zustandssignalen (X) und den Steuersignalen (U) in diesem Patch, und
Verwenden des trainierten Klassifikators (114) und der Regressionsmodelle ($R_1$-$R_n$.), um einen expliziten regelbasierten Steueralgorithmus (118) zu erstellen, der dazu konfiguriert ist, ein gemessenes Zustandssignal (X), das von dem dynamischen System (402) erhalten wird, in eine Steueraktion umzuwandeln, indem ein aktives Patch als eine Funktion des gemessenen Zustandssignals (X) identifiziert wird und das jeweilige Regressionsmodell ($R_1$-$R_n$.) für das identifizierte aktive Patch ausgewertet wird.

**2.** Verfahren nach Anspruch 1, wobei die Zustandssignale (X) und die Steuersignale (U) Zeitreihendaten darstellen, wobei für jeden Zeitschritt ein jeweiliges Steuersignal (U) durch den ersten Steueralgorithmus (106) basierend auf einem aktualisierten Zustandssignal (X) für diesen Zeitschritt erzeugt wird und wobei Zeitreihendaten in Bezug auf Zustandssignale (X) und die Steuersignale (U) für eine Vielzahl von Anfangszuständen und Szenarioparametern des dynamischen Systems (402) erzeugt werden.

3. Verfahren nach einem der Ansprüche 1 und 2, umfassend simulatives Erzeugen von Zustandssignalen und der Steuersignale (U) basierend auf einer Interaktion des ersten Steueralgorithmus (106) mit einem Simulationsmodell (104) des dynamischen Systems (402).

4. Verfahren nach Anspruch 3, wobei der erste Steueralgorithmus (106) einen Algorithmus für modellprädiktive Regelung, MPC, umfasst, wobei das Verfahren Folgendes umfasst:

Auslesen von Zustandssignalen (X) aus dem Simulationsmodell (104),
Verwenden des MPC-Algorithmus, um für jedes Zustandssignal (X) eine Mehrzahl von Varianten eines Steuersignals (U) zu bestimmen,
Verwenden des Simulationsmodells (104) zum Simulieren eines Verhaltens des dynamischen Systems (402) für jede der Varianten des Steuersignals (U) über einen definierten Prädiktionshorizont, und
Zuweisen einer der Varianten des Steuersignals (U) zu dem jeweiligen Zustandssignal (X), das zu einem optimierten Verhalten des dynamischen Systems (402) führt.

5. Verfahren nach einem der Ansprüche 1 bis 3, wobei der erste Steueralgorithmus (106) eine neuronale netzwerkbasierte Richtlinie umfasst, die dazu trainiert ist, Zustandssignale (X) auf zugewiesene Steuersignale (U) abzubilden.

6. Verfahren nach einem der Ansprüche 1 bis 5, umfassend Erzeugen von Zustandssignalen (X) und der Steuersignale (U) durch Durchführen einer Mehrzahl von Versuchen, die eine Interaktion einer On-Field-Steuerung (404), die den ersten Steueralgorithmus (106) ausführt, mit dem dynamischen System (402) umfassen.

7. Verfahren nach einem der Ansprüche 1 bis 6, wobei das Erkennen von Patches auf dem Steuerdatenverteiler (200) einen unüberwachten Prozess von Folgendem umfasst:

Abtasten von Steuerpunkten (Q) in dem Steuerdatenverteiler (200),
für jeden abgetasteten Steuerpunkt (Q) Bestimmen einer lokalen Näherungsfunktion, die ein Patch beschreibt, das durch eine Nachbarschaft von Steuerpunkten (Q) gebildet wird, die mit diesem abgetasteten Steuerpunkt (Q) assoziiert sind, und
Kennzeichnen der bestimmten lokalen Näherungsfunktion mit einem vorhandenen Patch-Kennzeichen oder einem neuen Patch-Kennzeichen basierend auf einer Ähnlichkeit mit gespeicherten lokalen Näherungsfunktionen, die andere Patches darstellen.

8. Verfahren nach einem der Ansprüche 1 bis 7, wobei jedes Patch eine Hyperebene in einem Raum umfasst, in den der Steuerdatenverteiler (200) eingebettet ist.

9. Verfahren nach Anspruch 8, wobei die jeweiligen Regressionsmodelle ($R_1$-$R_n$.) jeweils ein lineares Regressionsmodell umfassen.

10. Verfahren nach einem der Ansprüche 8 und 9, wobei der Steuerdatenverteiler (200) einen nichtlinearen Bereich umfasst,
wobei das Erkennen von Patches auf dem Steuerdatenverteiler (200) Anpassen einer Mehrzahl von Hyperebenen auf dem nichtlinearen Bereich umfasst.

11. Verfahren nach einem der Ansprüche 1 bis 7, wobei der Steuerdatenverteiler (200) einen nichtlineare Bereich umfasst,
wobei das Erkennen von Patches auf dem Steuerdatenverteiler (200) Anpassen des nichtlinearen Bereichs mit einem oder mehreren Patches umfasst, die durch polynomiale lokale Näherungsfunktionen definiert sind.

12. Verfahren nach Anspruch 11, wobei die für das eine oder die mehreren Patches trainierten Regressionsmodelle ($R_1$-$R_n$.) jeweilige polynomiale Regressionsmodelle umfassen.

13. Verfahren nach einem der Ansprüche 1 bis 12, umfassend Trainieren einer entsprechenden Support-Vektor-Maschine, SVM, für jedes Patch, um Steuerpunkte (Q) in verschiedene Patches zu klassifizieren, wobei das aktive Patch durch Verwenden des gemessenen Zustandssignals (X) identifizierbar ist, um eine SVM-Indikatorfunktion auszuwerten, die mit einzelnen Patches assoziiert ist.

14. Nichtflüchtiges computerlesbares Speichermedium, das Anweisungen aufweist, die, wenn sie von einer Computervorrichtung verarbeitet werden, die Computervorrichtung zum Durchführen des Verfahrens nach einem der Ansprüche 1 bis 13 konfigurieren.

15. Steuerung (404) für ein dynamisches System (402), umfassend:

> einen Prozessor (408); und
> einen Speicher (410), der ein Computerprogramm speichert, das einen expliziten regelbasierten Steueralgorithmus (118) umfasst, der, wenn er von dem Prozessor (408) ausgeführt wird, die Steuerung (404) zu Folgendem konfiguriert:

>> Empfangen eines gemessenen Zustandssignals (X) von dem dynamischen System (402),
>> Identifizieren eines aktiven Patches aus mehreren Patches auf einem Steuerdatenverteiler (200) in Bezug auf das dynamische System (402) unter Verwendung eines trainierten Steuerpunkt-Klassifikators (114) als eine Funktion des gemessenen Zustandssignals (X),
>> wobei der Steuerdatenverteiler (200) durch eine Mehrzahl von gespeicherten Steuerpunkten (Q) gebildet wird, wobei jeder Steuerpunkt (Q) ein Zustandssignal (X), das einen Zustand des dynamischen Systems (402) spezifiziert, und ein Steuersignal (U) darstellt, das diesem Zustandssignal (X) zugewiesen ist, wobei jedes Zustandssignal (X) auf einen mehrdimensionalen Zustandsraum abgebildet wird, wobei jedes Patch durch Steuerpunkte (Q) auf dem Steuerdatenverteiler (200) definiert wird, die zu einer gemeinsamen lokalen Näherung gehören,
>> Ausführen einer Steueraktion als eine Funktion des gemessenen Zustandssignals (X) durch Auswerten eines trainierten Regressionsmodells ($R_1$-$R_n$.), das mit dem identifizierten Patch assoziiert ist, wobei das Regressionsmodell ($R_1$-$R_n$.) dazu trainiert wird, eine Beziehung zwischen den Zustandssignalen (X) und den Steuersignalen (U) in dem identifizierten Patch anzunähern.

**Revendications**

1. Procédé de configuration d'un dispositif de commande (404) d'un système dynamique (402), comprenant :

> la lecture d'une pluralité de signaux d'état (X), chaque signal d'état (X) spécifiant un état du système dynamique (402) et étant mis en correspondance avec un espace d'état multidimensionnel,
> l'utilisation d'un premier algorithme de commande (106) pour déterminer, pour chaque signal d'état (X), un signal de commande (U) affecté à ce signal d'état (X), chaque signal d'état (X) et le signal de commande (U) affecté représentant un point de commande respectif (Q) dans un collecteur de données de commande (200) appartenant au système dynamique (402),
> la détection de lots sur le collecteur de données de commande (200) en identifiant des points de commande (Q) sur le collecteur de données de commande (200) qui appartiennent à une fonction commune d'approximation locale,
> l'entraînement d'un classificateur (114) pour classifier des points de commande (Q) en différents lots parmi les lots détectés,
> l'entraînement d'un modèle de régression respectif ($R_1$-$R_n$.) pour chaque lot détecté, pour approximer une relation entre les signaux d'état (X) et les signaux de commande (U) dans ce lot, et
> l'utilisation du classificateur entraîné (114) et des modèles de régression ($R_1$-$R_n$.) pour créer un algorithme de commande explicite basé sur des règles (118), qui est configuré pour convertir un signal d'état mesuré (X) obtenu à partir du système dynamique (402) en une action de commande par identification d'un lot actif en fonction du signal d'état mesuré (X) et évaluation du modèle de régression respectif ($R_1$-$R_n$.) pour le lot actif identifié.

2. Procédé selon la revendication 1, les signaux d'état (X) et les signaux de commande (U) représentant des données de série temporelle, pour chaque pas de temps, un signal de commande respectif (U) étant généré par le premier algorithme de commande (106) sur la base d'un signal d'état mis à jour (X) pour ce pas de temps, et des données de série temporelle concernant des signaux d'état (X) et les signaux de commande (U) étant générées pour une variété d'états initiaux et de paramètres de scénario du système dynamique (402).

3. Procédé selon l'une quelconque des revendications 1 et 2, comprenant la génération simulée de signaux d'état et de signaux de commande (U) sur la base d'une interaction du premier algorithme de commande (106) avec un modèle de simulation (104) du système dynamique (402).

4. Procédé selon la revendication 3, le premier algorithme de commande (106) comprenant un algorithme de commande prédictive de modèle, MPC, le procédé comprenant :

la lecture de signaux d'état (X) à partir du modèle de simulation (104),
l'utilisation de l'algorithme MPC pour déterminer, pour chaque signal d'état (X), une pluralité de variantes d'un signal de commande (U),
l'utilisation du modèle de simulation (104) pour simuler un comportement du système dynamique (402) pour chacune des variantes du signal de commande (U) sur un horizon de prédiction défini, et
l'attribution d'une des variantes du signal de commande (U) au signal d'état respectif (X) qui permet d'obtenir un comportement optimisé du système dynamique (402).

5. Procédé selon l'une quelconque des revendications 1 à 3, le premier algorithme de commande (106) comprenant une politique basée sur un réseau neuronal entraînée pour mettre en correspondance des signaux d'état (X) avec des signaux de commande attribués (U).

6. Procédé selon l'une quelconque des revendications 1 à 5, comprenant la génération de signaux d'état (X) et de signaux de commande (U) en réalisant une pluralité d'expériences impliquant l'interaction d'un dispositif de commande sur le terrain (404) exécutant le premier algorithme de commande (106) avec le système dynamique (402).

7. Procédé selon l'une quelconque des revendications 1 à 6, la détection de lots sur le collecteur de données de commande (200) comprenant un processus non supervisé de :

l'échantillonnage de points de commande (Q) dans le collecteur de données de commande (200),
pour chaque point de commande échantillonné (Q), la détermination d'une fonction d'approximation locale décrivant un lot formé par un voisinage de points de commande (Q) associés à ce point de commande échantillonné (Q), et
l'étiquetage de la fonction d'approximation locale déterminée avec une étiquette de lot existante ou une nouvelle étiquette de lot basée sur une similarité avec des fonctions d'approximation locale stockées représentatives d'autres lots.

8. Procédé selon l'une quelconque des revendications 1 à 7, chaque lot comprenant un hyperplan dans un espace où le collecteur de données de commande (200) est incorporé.

9. Procédé selon la revendication 8, les modèles de régression respectifs ($R_1$-$R_n$.) comprenant chacun un modèle de régression linéaire.

10. Procédé selon l'une quelconque des revendications 8 et 9, le collecteur de données de commande (200) comprenant une région non linéaire,
la détection de lots sur le collecteur de données de commande (200) comprenant l'ajustement d'une pluralité d'hyperplans sur la région non linéaire.

11. Procédé selon l'une quelconque des revendications 1 à 7, le collecteur de données de commande (200) comprenant une région non linéaire,
la détection de lots sur le collecteur de données de commande (200) comprenant l'ajustement de la région non linéaire avec un ou plusieurs lots définis par des fonctions d'approximation locale polynomiales.

12. Procédé selon la revendication 11, les modèles de régression ($R_1$-$R_n$.) entraînés pour le ou les lots comprenant des modèles de régression polynomiale respectifs.

13. Procédé selon l'une quelconque des revendications 1 à 12, comprenant l'entraînement d'une machine à vecteurs de support correspondante, SVM, pour chaque lot pour classifier des points de commande (Q) en différents lots, le lot actif étant identifiable en utilisant le signal d'état mesuré (X) pour évaluer une fonction d'indicateur SVM associée à des lots individuels.

**14.** Support de stockage non transitoire lisible par ordinateur comprenant des instructions qui, lorsqu'elles sont traitées par un dispositif informatique, configurent le dispositif informatique pour qu'il exécute le procédé selon l'une quelconque des revendications 1 à 13.

**15.** Dispositif de commande (404) d'un système dynamique (402), comprenant :

un processeur (408) ; et
une mémoire (410) mémorisant un programme informatique intégrant un algorithme de commande explicite basé sur des règles (118), qui, lorsqu'il est exécuté par le processeur (408), configure le dispositif de commande (404) pour :

recevoir un signal d'état mesuré (X) du système dynamique (402),
identifier, en fonction du signal d'état mesuré (X), un lot actif parmi de multiples lots sur un collecteur de données de commande (200) appartenant au système dynamique (402), à l'aide d'un classificateur de point de commande entraîné (114),
le collecteur de données de commande (200) étant formé par une pluralité de points de commande mémorisés (Q), chaque point de commande (Q) représentant un signal d'état (X) spécifiant un état du système dynamique (402) et un signal de commande (U) affecté à ce signal d'état (X), chaque signal d'état (X) étant mis en correspondance avec un espace d'état multidimensionnel, chaque lot étant défini par des points de commande (Q) sur le collecteur de données de commande (200) qui appartiennent à une fonction d'approximation locale commune, et
exécuter une action de commande en fonction du signal d'état mesuré (X) en évaluant un modèle de régression entraîné ($R_1$-$R_n$.) associé au lot identifié, le modèle de régression ($R_1$-$R_n$.) étant entraîné pour approcher une relation entre les signaux d'état (X) et les signaux de commande (U) dans le lot identifié.

# FIG. 1

FIG. 2

EP 4 370 980 B1

FIG. 3

# FIG. 4

402 ── Dynamical System

406 ── Sensor

$U_a$

$X_a$

404 ── Controller

Memory

118

Processor(s)

410 ── 408

# FIG. 5

500

$X_a$

SVM Eval $F_1$ : $A_1^T x + c_1$
502a

0 → Hyperplane Inactive

SVM Eval $F_i$ : $A_i^T x + c_i$
502b

1 →

Hyperplane Active

Evaluate Regressor $R_i$
504

→ $U_a$

SVM Eval $F_n$ : $A_n^T x + c_n$
502n

0 → Hyperplane Inactive

## FIG. 6A

## FIG. 6B

## FIG. 6C

FIG. 7

FIG. 8

EP 4 370 980 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015234779 A1
- US 2012010757 A1